**Europäisches Patentamt**

**European Patent Office**

**Office européen des brevets**

(19)

(11) Veröffentlichungsnummer : **0 008 717**
**B1**

(12)

# EUROPÄISCHE PATENTSCHRIFT

(45) Veröffentlichungstag der Patentschrift :
22.09.82

(51) Int. Cl.³ : **A 01 G 9/24, F 24 J 3/00**

(21) Anmeldenummer : **79102971.3**

(22) Anmeldetag : **16.08.79**

(54) **Pflanzenzuchtverfahren mit Benutzung von Solarenergiespeichern.**

(30) Priorität : **05.09.78 CH 9297/78**

(43) Veröffentlichungstag der Anmeldung :
**19.03.80 (Patentblatt 80/06)**

(45) Bekanntmachung des Hinweises auf die Patenterteilung : **22.09.82 Patentblatt 82/38**

(84) Benannte Vertragsstaaten :
**BE CH DE FR GB IT NL SE**

(56) Entgegenhaltungen :
**AT B 310 225**

(73) Patentinhaber : **Laing, Oliver**
**Hofener Weg 35-37**
**D-7148 Remseck 2 - Aldingen (DE)**

(72) Erfinder : **Laing, Oliver**
**Weissdornweg 14**
**D-7400 Tübingen (DE)**
Erfinder : **Laing, Ingeborg, geb. Melchior**
**Hofener Weg 35 bis 37**
**D-7148 Remseck 2 - Aldingen (DE)**
Erfinder : **Laing, Karsten**
**Hofener Weg 35 bis 37**
**D-7148 Remseck 2-Aldingen (DE)**

Imprimerie Jouve, 18, rue St-Denis, 75001 Paris, France

Pflanzenzuchtverfahren mit Benutzung von Solarenergiespeichern

Die Erfindung bezieht sich auf die Benutzung von Solarenergiespeichern zum Einsatz in der Pflanzenzucht. Alle Topf- und Beetkulturen unter Glas oder auch im freien Beet weisen den gemeinsamen Nachteil auf, dass mit der Einstrahlung eine Aufwärmung des zunächst unter dem pflanzenphysiologisch optimalen Temperaturwert liegenden Bodens während der Einstrahlungsstunden erfolgt, die oft zu so hohen Temperaturen führt, dass keine Wachstumsförderung mehr bewirkt wird. Eine zu hohe Nachmittagstemperatur bewirkt aber, dass bereits während des Tages ein bedeutender Anteil der eingestrahlten Wärme durch IR-Rückstrahlung wieder verlorengeht, also nicht der Pflanze zugutekommt. Es ist wünschenswert, dass die am Tage eingestrahlte Wärme zu einer möglichst konstanten Temperatur des Bodens oder der Töpfe führt.

Gemäss der Erfindung wird die am Tage eingestrahlte Wärme durch Latentspeicher aufgenommen, solange ein Überangebot herrscht. Die gespeicherte Wärme wird wieder abgegeben, sobald die Umgebungstemperatur der Speicher unter die Kristallisationstemperatur der Speichermasse absinkt. Die Speicherbehälter werden als Auflage für Kulturtische in Gewächshäusern oder als Unterlagen für Freiland- oder Unterglas-Beetkulturen, vorzugsweise in Form von Plastikkörpern ausgebildet. Diese Speicherbehälter sind mit einer reversierbar schmelzenden kristallinen Speichermasse gefüllt, wobei die Kristallisationstemperatur der Speichermasse in der Nähe der mittleren Tagestemperatur des Bodens gewählt wird.

Diese Speicherbehälter nehmen die während des Tages eingestrahlte Wärme, die bisher in den Boden eindrang, auf und geben sie während der täglichen Abkühlungsperioden wieder ab. Dabei ist die Temperatur am Morgen vergleichsweise höher als bei Kulturen ohne diese Speicher, was wachstumsfördernd ist. Während der Einstrahlungsstunden und auch am Abend liegen diese Werte entsprechend niedriger, was für die Pflanze ohne Nachteile ist. Es ist erwünscht, dass die Bodentemperaturen während des Tages etwas höher liegen als während der Nacht. Auch diese Forderung ist mit der erfindungsgemässen Vorrichtung zu verwirklichen, indem den Speichermassen solche isotypischen oder epitaxischen Kristalle beigemischt werden, die sich vom Kristalltyp der Speichermassenkristalle hinsichtlich der typischen Kantenlängen und/oder der typischen Kantenwinkel in solchem Maße unterscheiden, dass zwar noch eine Impfung erfolgt, jedoch erst bei einer gewissen Unterschreitung der Kristallisationstemperatur. Hierdurch verzögert sich die nächtliche Wärmefreisetzung um mehrere Stunden, wodurch Speichermenge eingespart wird.

Das erfindungsgemässe Verfahren kann auch zur Frostverhinderung eingesetzt werden. Hierzu werden die erfindungsgemässen Hohlkörper mit einer Speichermasse gefüllt, deren Kristallisationstemperatur nur wenige Grade über dem Gefrierpunkt liegt. Diese Platten laden sich während des Tages auf, geben ihre Kristallisationswärme jedoch erst dann ab, wenn Frostgefahr besteht. Derartige Speicherkörper sind nicht nur als Einlage in der Humusschicht oder als Unterlagen in Gewächshäusern geeignet, sondern können auch unter oder zwischen frostgefährdeten Bäumen und Büschen aufgestellt werden. Als Speichermassen eignen sich

für 18 °C Dimethylsulfoxid,
für 11 °C 1 Mol $Na_2SO_4 \times 10\ H_2O$ + 2 Mol KCl
für 5 °C 1 Mol $Na_2SO_4 \cdot 10\ H_2O$ + 2 Mol $NH_4Cl$
für 0 °C Wasser.

Die Erfindung soll anhand von Figuren beschrieben werden.

Figur 1   zeigt den Einsatz eines erfindungsgemässen Latentspeichers als Tischauflage für Kulturtische.

Figur 2   zeigt eine weitere Ausbildung der Latentspeicher als Tischauflage.

Figur 3   zeigt die Anordnung von Hohlkörpern im Frühbeet.

Figur 4   zeigt die Anordnung unter Büschen.

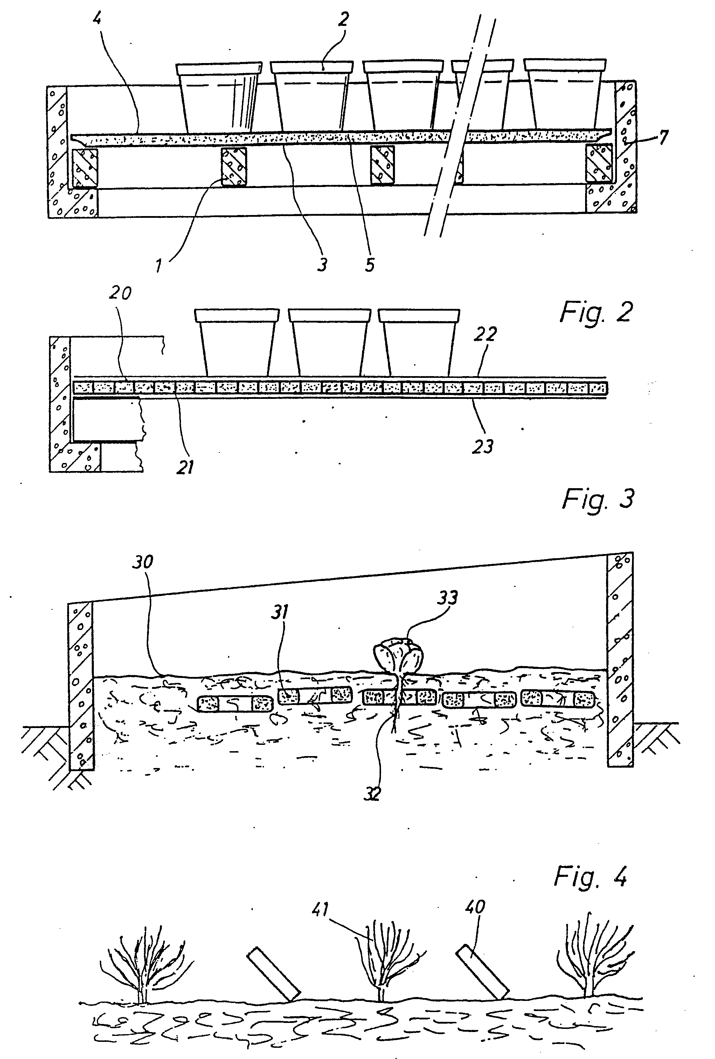

In Figur 1 ist ein Kulturtisch eines Gewächshauses im Schnitt gezeigt. Die quer zum Kulturtisch verlaufenden Streben 1 unterstützen die Speicher-Hohlkörper, die gleichzeitig die Tischplatte für die Blumentöpfe 2 bilden. Dieser Hohlkörper ist aus einer als Wanne verformten Blechtafel 3 und einer unlösbar damit verbundenen ebenen Blechtafel 4 ausgebildet.

Figur 2 zeigt einen Hohlkörper 20 im Schnitt. Dieser ist als Doppelstegplatte aus thermoplastischem Werkstoff ausgebildet, wobei die Kanäle 21 mit Speichermasse gefüllt sind. Auf den beiden Hauptflächen sind Folien 22 und 23, vorzugsweise aus Aluminium aufgebracht. Diese verhindern einerseits den Durchtritt von Wasser durch die thermoplastischen Gurtflächen des Hohlkörpers 20, andererseits strahlungsoptische Funktionen. So ist die Folie 22 vorzugsweise mit einer schwarzen Schicht überzogen. Für Hohlkörper, die unmittelbar dem Sonnenlicht ausgesetzt sind, sieht die Erfindung eine spektralselektive Oberfläche vor, die möglichst wenig Wärme im Infrarotbereich abstrahlt, dennoch die Solarenergie optimal aufnimmt. Die Folie 23 dagegen soll erfindungsgemäss hochreflektierend sein, damit sie möglichst wenig Wärme über Strahlung abgibt.

Figur 3 zeigt ein Frühbeet, bei dem unterhalb der Humusschicht 30 Latentspeichermassen-gefüllte Hohlkörper 31 in die Humusschicht eingelegt sind, die als ringförmige Hohlkörper ausgebildet sind und um die Wurzeln 32 der Pflanzen 33 herum angeordnet sind.

Figur 4 zeigt eine als winkelverstellbare Hohlplatte 40 ausgebildete Alternative, die z.B. zwischen Büschen 41 aufgestellt wird und so ausgerichtet ist, dass sie während der kritischen Monate möglichst viel Einstrahlung aufnehmen kann. Als Speichermasse findet bevorzugt eine Masse mit einer Kristallisationstemperatur zwischen 0 °C und 11 °C Verwendung.

## Ansprüche

1. Verfahren zur besseren Nutzung der Solarenergie zur Pflanzenzucht, dadurch gekennzeichnet, dass die Pflanzen im thermischen Kontakt mit Speicher-Hohlkörpern (3, 20, 31, 40) gebracht werden, die mit einer schmelzbaren Speichermasse gefüllt sind.

2. Verfahren nach Anspruch 1, dadurch gekennzeichnet, dass Speichermassen eingesetzt werden, deren Kristallisationstemperatur in der Nähe der über den Tag gemittelten Bodentemperatur liegt.

3. Verfahren nach Anspruch 1, dadurch gekennzeichnet, dass eine Speichermasse eingesetzt wird, deren Kristallisationstemperatur in der Nähe der pflanzenphysiologisch optimalen Temperatur liegt.

4. Verfahren nach Anspruch 1, dadurch gekennzeichnet, dass zur Verhinderung von Frostschäden eine Speichermasse mit einer Kristallisationstemperatur eingesetzt wird, die um wenige °K oberhalb der Temperatur liegt, bei der die Pflanze Schaden nehmen würde.

5. Verfahren nach Anspruch 1, dadurch gekennzeichnet, dass zur Impfung der Speichermasse Kristalle zugefügt werden, deren sterische Daten nicht mit denen der Speicherkristalle zusammenfallen, die dennoch — jedoch erst im metastabilen Bereich — die Kristallisation einleiten.

## Claims

1. Process for better use of solar energy for the cultivation of plants, characterized in that the plants are brought into thermal contact with hollow storage elements (3, 20, 31, 40) which are filled with a meltable storage mass.

2. Process according to claim 1, characterized in that there are used storage masses whose crystallization temperature is in the vicinity of the ground temperature averaged during the day.

3. Process according to claim 1, characterized in that there is used a storage mass whose crystallization temperature is in the vicinity of the phytophysiological temperature.

4. Process according to claim 1, characterized in that to prevent frost damage there ist used a storage mass having a crystallization temperature which is a few K above the temperature at which the plants would suffer damage.

5. Process according to claim 1, characterized in that for inoculation of the storage mass there are added crystals whose steric characteristics do not coincide with those of the storage crystals but which — only in the metastable range, however — initiate crystallization.

## Revendications

1. Procédé permettant d'améliorer l'exploitation de l'énergie solaire appliqué à la culture des plantes, caractérisé par le fait que les plantes sont amenées au contact de réservoirs creux remplis d'une masse d'accumulation fusible.

2. Procédé correspondant à l'exigence 1, caractérisé par la mise en œuvre de masses d'accumulation dont la température de cristallisation est voisine de la température diurne du sol.

3. Procédé correspondant à l'exigence 1, caractérisé par la mise en œuvre d'une masse d'accumulation dont la température de cristallisation est voisine de la température physiologiquement optimale de la plante.

4. Procédé correspondant à l'exigence 1, caractérisé par la mise en œuvre d'une masse d'accumulation destinée à éviter les dégâts dus au gel, dont la température de cristallisation est supérieure de quelques K à la température susceptibles d'endommager la plante.

5. Procédé correspondant à l'exigence 1, caractérisé par l'adjonction de cristaux destinés à l'inoculation de la masse d'accumulation, dont les propriétés stériques ne coïncident pas avec celles des cristaux d'accumulation qui déclenchent cependant la cristallisation — toutefois seulement dans le domaine métastable.

0 008 717

Fig. 2

Fig. 3

Fig. 4

1